# EUROPÄISCHE PATENTSCHRIFT

(11) **EP 3 220 781 B1**
(45) Veröffentlichungstag und Bekanntmachung des Hinweises auf die Patenterteilung: **26.09.2018**
(21) Anmeldenummer: 15816362.6
(22) Anmeldetag: 23.11.2015
(51) Int. Cl.: A47G 1/17, A45C 13/10, F16B 1/00

(54) **VERSCHLUSSVORRICHTUNG ZUM BEFESTIGEN EINES ELEKTRONISCHEN GERÄTS AN EINER HALTEEINRICHTUNG**
CLOSURE DEVICE FOR SECURING AN ELECTRONIC DEVICE ON A HOLDING DEVICE
DISPOSITIF DE FERMETURE PERMETTANT DE FIXER UN APPAREIL ÉLECTRONIQUE À UN DISPOSITIF DE RETENUE

(30) Priorität: 21.11.2014 DE 102014223844
(43) Veröffentlichungstag der Anmeldung: 27.09.2017
(73) Patentinhaber: Fidlock GmbH, 30175 Hannover (DE)
(72) Erfinder: FIEDLER, Joachim, 30175 Hannover (DE)
(74) Vertreter: Maikowski & Ninnemann Patentanwälte Partnerschaft mbB
(86) Internationale Anmeldenummer: PCT/EP2015/002344
(87) Internationale Veröffentlichungsnummer: WO 2016/078772

(56) Entgegenhaltungen:
- DE-A1- 19 922 618
- GB-A- 2 449 906

## Beschreibung

Die Erfindung betrifft eine Verschlussvorrichtung nach dem Oberbegriff des Anspruchs 1.

Eine derartige Verschlussvorrichtung dient insbesondere zum Befestigen eines elektronischen Geräts an einer Halteeinrichtung. Z. B. kann mittels einer solchen Verschlussvorrichtung ein Mobiltelefon, insbesondere ein Smartphone, oder ein sonstiges Kommunikationsgerät, beispielsweise ein Navigationsgerät oder dergleichen, an einer Halteeinrichtung, beispielsweise an einem Armaturenbrett eines Fahrzeugs oder dergleichen, festgelegt werden.

Eine solche Verschlussvorrichtung umfasst ein erstes Verschlussteil, das ein erstes Ansetzteil aufweist, und ein zweites Verschlussteil, das ein zweites Ansetzteil aufweist. Das zweite Verschlussteil ist in eine Schließrichtung an das erste Verschlussteil ansetzbar. An einem der Ansetzteile ist hierbei mindestens ein Gewindegang und an dem anderen der Ansetzteile mindestens ein Eingriffselement zum Auflaufen auf den mindestens einen Gewindegang beim Ansetzen der Verschlussteile aneinander angeordnet.

Aus der WO 92/180 28 A1 ist eine Verschlussvorrichtung bekannt, bei der an Verschlussteilen jeweils ein Gewinde vorgesehen ist. Jedes Verschlussteil weist hierbei einen Magnet auf, der ein Ansetzen der Verschlussteile aneinander magnetisch unterstützt. Nach Ansetzen der Verschlussteile aneinander müssen die Verschlussteile händisch miteinander verschraubt werden, um den Verschluss zu schließen.

Bei einer aus der GB 2 449 906 A bekannten Verschlussvorrichtung können Verschlussteile miteinander verbunden werden, indem Gewindegänge, unterstützt durch Magnetelemente, miteinander in Eingriff gebracht werden.

Aus der DE 199 22 618 A1 ist ein Schnellverschluss bekannt, bei dem Teile durch Wirkung von Permanentmagneten zueinander hingezogen werden und dabei mit schrägen Kanten aufeinander auflaufen.

Aufgabe der vorliegenden Erfindung ist es, eine Verschlussvorrichtung zur Verfügung zu stellen, die in einfacher, günstiger, mechanisch stabiler Weise eine Halterung eines elektronischen Geräts an einer zugeordneten Halteeinrichtung, beispielsweise an einem Armaturenbrett eines Fahrzeugs ermöglicht.

Diese Aufgabe wird durch einen Gegenstand mit den Merkmalen des Anspruchs 1, bzw. des Anspruchs 9, bzw. des Anspruchs 12, gelöst.

Demnach ist bei der Verschlussvorrichtung zusätzlich eine Magneteinrichtung vorgesehen, die beim Ansetzen magnetisch anziehend zwischen dem ersten Verschlussteil und dem zweiten Verschlussteil wirkt. Der mindestens eine Gewindegang weist hierbei eine derartige Steigung auf, dass beim Ansetzen der Verschlussteile aneinander aufgrund der magnetisch anziehenden Wirkung der Magneteinrichtung der mindestens eine Gewindegang und das mindestens eine Eingriffselement aufeinander auflaufen und die Verschlussteile dadurch selbsttätig in eine Drehrichtung um die Schließrichtung zueinander verdreht werden.

Unter der Steigung wird hierbei, entsprechend dem üblichen Verständnis, ein Maß für die Steilheit des Gewindegangs verstanden. Die Steigung entspricht der zwischen den Verschlussteilen zurückgelegten Wegstrecke in Schließrichtung pro Verdrehstrecke beim Verdrehen der Verschlussteile zueinander.

Der Eingriff des Gewindegangs an dem Ansetzteil des einen Verschlussteils und des Eingriffselements an dem anderen Verschlussteil ist somit nicht selbsthemmend. Durch Ansetzen der Verschlussteile in die Schließrichtung aneinander gelangt der Gewindegang des einen Ansetzteils selbsttätig in Eingriff mit dem Eingriffselement des anderen Ansetzteils, so dass die Ansetzteile und darüber die Verschlussteile selbsttätig, bewirkt durch die magnetische Anziehungskraft zwischen den Verschlussteilen, miteinander verschraubt werden.

Es ergibt sich ein sehr einfacher Ansetzvorgang, der von einem Nutzer lediglich ein (ungefähres) Ansetzen der Verschlussteile aneinander erfordert. Das mechanische Ineingriffbringen durch Verschrauben der Verschlussteile miteinander erfolgt unter Wirkung der magnetischen Anziehungskraft der Magneteinrichtung selbsttätig, wobei hierzu die Magneteinrichtung entsprechend dimensioniert ist.

Beispielsweise weist jedes Verschlussteil ein Magnetelement in Form eines Permanentmagneten auf, die bei Ansetzen der Verschlussteile aneinander mit ungleichnamigen Polen aufeinander zu weisen, so dass eine magnetische Anziehungskraft zwischen den Magnetelementen besteht.

In einer Ausführungsform können an jedem Ansetzteil ein oder mehrere Gewindegänge angeordnet sein. An dem ersten Ansetzteil des ersten Verschlussteils und an dem zweiten Ansetzteil des zweiten Verschlussteils sind somit jeweils ein oder mehrere Gewindegänge angeordnet, die bei Ansetzen der Verschlussteile aneinander aufeinander auflaufen und dadurch die Verschlussteile schraubend miteinander in Eingriff bringen.

In einem verbundenen Zustand, in dem die Verschlussteile aneinander angesetzt sind, stehen der mindestens eine Gewindegang des einen Ansetzteils und das mindestens eine Eingriffselement des anderen Ansetzteils, beispielsweise ebenfalls in Form eines Gewindegangs, in verschraubter Weise miteinander in Eingriff. Die Verschlussteile werden hierbei über die Magneteinrichtung in Position zueinander gehalten, wobei die Magneteinrichtung einem Zurückdrehen der Verschlussteile zueinander zum Lösen des Gewindeeingriffs entgegenwirkt.

Gemäß Anspruch 1 ist eine mechanische Verrastung vorgesehen, die die Verschlussteile in Position zueinander hält, wenn die Verschlussteile aneinander angesetzt worden sind und sich in ihrem verbundenen Zustand befinden. Eine solche mechanische Verrastung wirkt einem Zurückdrehen der Verschlussteile zueinander entgegen der Drehrichtung entgegen und sichert die Verschlussvorrichtung somit gegen ein (unbeabsichtigtes) Öffnen.

Eine solche mechanische Verrastung kann hergestellt werden durch ein Vorsprungelement an einem der Verschlussteile, das in verbundenem Zustand an einer Anlagefläche des anderen Verschlussteils anliegt und dadurch ein Herausdrehen der Verschlussteile aus dem verbundenen Zustand verhindert.

Das Vorsprungselement kann beispielsweise an einem Sperrhebel ausgebildet sein, das elastisch mit einem Gehäuseteil des zugeordneten Verschlussteils verbunden ist. Sind die Verschlussteile somit in verbundenem Zustand mechanisch miteinander verrastet, so kann der Sperrhebel betätigt werden, um das Vorsprungselement außer Anlage mit der Anlagefläche des anderen Verschlussteils zu bringen und somit die mechanische Verrastung zu lösen. Ist die mechanische Verrastung gelöst, können die Verschlussteile aus ihrer verbundenen Stellung heraus verdreht werden, um auf diese Weise die Verschlussvorrichtung zu öffnen.

Das erste Ansetzteil und/oder das zweite Ansetzteil sind in einer vorteilhaften Ausgestaltung zumindest abschnittsweise konisch zur Schließrichtung geformt. Das erste Ansetzteil und das zweite Ansetzteil sind somit nicht zylindrisch zur Schließrichtung ausgebildet, sondern zumindest abschnittsweise konisch, was das Ansetzen der Ansetzteile aneinander erleichtern kann.

Unter der konischen Ausgestaltung wird hierbei verstanden, dass das erste Ansetzteil und/oder das zweite Ansetzteil einen einhüllenden geometrischen Körper aufweisen, der in seiner Grundform konisch ist, also beispielsweise die Grundform eines Kegelstumpfes aufweist. Es ist hierbei nicht notwendig, dass das erste Ansetzteil und/oder das zweite Ansetzteil insgesamt eine konische Form aufweisen, sondern es genügt, dass Abschnitte des ersten Ansetzteils und/oder des zweiten Ansetzteils durch die konische Grundform des einhüllenden Körpers bestimmt sind.

Die Ansetzteile können hierbei an ihren Gewindegängen konisch geformt sein oder auch an sonstigen Flächenabschnitten, die beim Ansetzen der Ansetzteile aneinander miteinander in Anlage gelangen.

Insbesondere können Gewindegänge eines oder beider Ansetzteile an einer dem anderen Ansetzteil des anderen Verschlussteils zugewandten Seite unter einem Winkel zur Schließrichtung geneigt und somit konisch ausgebildet sein.

Das Ansetzen der Ansetzteile aneinander kann weiter dadurch verbessert werden, dass die Gewindegänge - betrachtet entlang der Schließrichtung - eine veränderliche Höhe aufweisen. Insbesondere kann ein Gewindegang an einem vorderen Ende eine kleinere Höhe als an einem anderen, hinteren Ende aufweisen.

Unter der Höhe wird hierbei der entlang der Schließrichtung gemessene Abstand zwischen einer in Schließrichtung vorderen Führungsfläche des Gewindegangs und einer in Schließrichtung hinteren Führungsfläche des Gewindegangs verstanden. Dieser Abstand kann, betrachtet entlang des Gewindegangs, veränderlich sein und an unterschiedlichen Orten somit unterschiedliche Werte annehmen. Beispielsweise kann die Höhe sich kontinuierlich verändern und beispielsweise, betrachtet in die Drehrichtung, kontinuierlich größer werden.

Der mindestens eine Gewindegang kann, in einer Ausgestaltung, geradlinig ausgebildet sein und sich somit linear um das in seiner Grundform zylindrische Ansetzteil erstrecken, wobei an dem einen Ansetzteil sich Gewindegänge beispielsweise an einer äußeren Mantelfläche erstrecken, während an dem anderen Ansetzteil sich zugeordnete Gewindegänge an einer inneren Mantelfläche in einer Öffnung des Ansetzteils erstrecken.

Denkbar und möglich ist jedoch auch, dass die Gewindegänge nicht geradlinig verlaufen, sondern ihre Richtung ändern und unterschiedliche Steigungen aufweisen. So kann ein Gewindegang einen ersten Abschnitt und einen zweiten Abschnitt aufweisen, die unterschiedliche Steigungen aufweisen. So kann ein erster Abschnitt beispielsweise zur Schließrichtung geneigt, ein zweiter hingegen entlang der Schließrichtung verlaufen. Es ergibt sich insbesondere zum Öffnen der Verschlussvorrichtung eine kombinierte Dreh-Zieh-Bewegung, die so gestaltet ist, dass einem unbeabsichtigten Öffnen entgegen gewirkt ist.

Die Abschnitte können auch so gerichtet sein, dass sie in unterschiedliche Richtungen weisen und ein Verdrehen der Verschlussteile zueinander beim Ansetzen in unterschiedliche Drehrichtungen bewirken. So kann bei Eingriff des mindestens einen Eingriffselements in den ersten Abschnitt des mindestens einen Gewindegangs bei Ansetzen der Verschlussteile aneinander eine Verdrehung der Verschlussteile zueinander in eine erste Drehrichtung bewirkt werden, während bei Eingriff des mindestens einen Eingriffselements in den zweiten Abschnitt des mindestens einen Gewindeganges die Verschlussteile in umgekehrte Drehrichtung, nämlich in eine der ersten Drehrichtung entgegengesetzte, zweite Drehrichtung zueinander verdreht werden. Die Abschnitte schließen aneinander an, so dass nach Durchlaufen des ersten Abschnittes des Gewindegangs das Eingriffselement in den zweiten Abschnitt einläuft und sich somit die Verdrehrichtung der Verschlussteile zueinander umkehrt. An den zweiten Abschnitt können auch noch weitere Abschnitte anschließen, so dass der Gewindegang sich mäanderförmig an dem zugeordneten Ansetzteil erstreckt.

In einer anderen Ausführungsform kann jedem Gewindegang an einem Ansetzteil auch ein komplementärer, spiegelsymmetrischer Gewindegang zugeordnet sein. Bei Eingriff eines Eingriffselements in den Gewindegang bewegen sich die Verschlussteile in vorbestimmter Weise zueinander. Greift das Eingriffselement hingegen in den komplementären Gewindegang ein, so bewegen sich die Verschlussteile in gerade umgekehrter, spiegelsymmetriescher Weise zueinander. Die Bewegung der Verschlussteile zueinander beim Ansetzen ist somit grundsätzlich gleich, jedoch gerade umgekehrt zueinander. Ein solch komplementärer Gewindegang ermöglicht, die Verschlussteile in unterschiedlichen Richtungen miteinander zu verschrauben.

Gemäß Anspruch 12 schließt an den mindestens einen Gewindegang, betrachtet in die Drehrichtung, ein Führungsabschnitt an, in den das Eingriffselement nach Passieren des Gewindegangs in die Schließrichtung eingeführt wird. Dieser Führungsabschnitt ist beispielsweise längs entlang der Schließrichtung erstreckt und stellt eine Falle für das Eingriffselement dar. Nach Passieren des Gewindegang gelangt das Eingriffselement in den Bereich des Führungsabschnitts und wird in die Schließrichtung in dem Führungsabschnitt bewegt. In einer Schließstellung, in der die Verschlussteile aneinander angesetzt sind, liegt das Eingriffselement somit in dem Führungsabschnitt ein, wodurch ein Verdrehen der Verschlussteile zueinander entgegen der Drehrichtung gesperrt ist.

In einer weiteren Ausführungsform kann der Führungsabschnitt eine quer zur Schließrichtung erstreckte Anschlagfläche aufweisen, die den Führungsabschnitt entgegen der Schließrichtung begrenzt. Sollen die Verschlussteile zum Öffnen der Verschlussvorrichtung voneinander getrennt werden und werden hierzu die Verschlussteile entgegen der Schließrichtung voneinander entfernt, so wird das Eingriffselement innerhalb des Führungsabschnitts entgegen der Schließrichtung bewegt und gelangt in Anlage mit der den Führungsabschnitt entgegen der Schließrichtung begrenzenden Anschlagfläche. Ein weiteres Entfernen der Verschlussteile voneinander entgegen der Schließrichtung ist somit gesperrt, so dass ein Öffnen des Verschlusses allein durch Ziehen an den Verschlussteilen entgegen der Schließrichtung nicht ohne weiteres möglich ist und insbesondere ein ungewolltes Öffnen der Verschlussvorrichtung auf diese Weise verhindert ist.

Erst wenn die Verschlussteile entgegen der Drehrichtung zueinander verdreht und somit das Eingriffselement aus dem Bereich der Anschlagfläche des Führungsabschnitts heraus bewegt wird, können die Verschlussteile voneinander getrennt werden, indem das Eingriffselement entgegen der Drehrichtung entlang des Gewindegangs gleitet und damit die Verbindung zwischen den Verschlussteilen gelöst wird.

Das öffnen des Verschlusses ist somit nicht durch ein einfaches Ziehen an den Verschlussteilen entgegen der Schließrichtung möglich. Vielmehr ist erforderlich, das Eingriffselement zunächst entgegen der Schließrichtung innerhalb des Führungsabschnitts zu bewegen, um sodann die Verschlussteile entgegen der Drehrichtung zueinander zu verdrehen, um den Verschluss zu öffnen. Dies ist nur durch eine bewusste Handhabung möglich, so dass einem ungewollten Öffnen des Verschlusses entgegen gewirkt wird.

Das elektronische Gerät kann beispielsweise als Mobiltelefon, insbesondere als Smartphone, ausgebildet sein. Das elektronische Gerät kann beispielsweise aber auch ein Navigationsgerät oder ein anderes Kommunikationsgerät sein. Bei der Halteeinrichtung kann es sich beispielsweise um ein Armaturenbrett, an dem das elektronische Gerät festzulegen sein soll, handeln.

Der der Erfindung zugrunde liegende Gedanke soll nachfolgend anhand der in den Figuren dargestellten Ausführungsbeispiele näher erläutert werden. Es zeigen:
- Fig. 1A, 1B: perspektivische Ansichten einer Verschlussvorrichtung mit zwei Verschlussteilen, die miteinander in Gewindeeingriff gebracht werden können;
- Fig. 1C: eine schematische Ansicht darstellend die Steigung eines Gewindegangs;
- Fig. 1D: in einer schematischen Ansicht die variierende Höhe eines Gewindeganges;
- Fig. 2A: eine Draufsicht auf eine Verschlussvorrichtung
- Fig. 2B: eine Schnittansicht entlang der Linie B-B gemäß Fig. 2A;
- Fig. 3: eine perspektivische Ansicht eines weiteren Ausführungsbeispiels einer Verschlussvorrichtung;
- Fig. 4: eine perspektivische Ansicht der Verschlussvorrichtung gemäß Fig. 3, in einem verbundenen Zustand von Verschlussteilen der Verschlussvorrichtung;
- Fig. 5: eine Draufsicht auf die Verschlussvorrichtung gemäß Fig. 3 und 4;
- Fig. 6A: eine Draufsicht auf die Verschlussvorrichtung;
- Fig. 6B: eine Schnittansicht entlang der Linie A-A gemäß Fig. 6A;
- Fig. 7A, 7B: perspektivische Explosionsansichten eines weiteren Ausführungsbeispiels einer Verschlussvorrichtung;
- Fig. 8A, 8B: perspektivische Ansichten eines wiederum anderen Ausführungsbeispiels einer Verschlussvorrichtung;
- Fig. 9A, 9B: perspektivische Explosionsansichten eines weiteren Ausführungsbeispiels einer Verschlussvorrichtung;
- Fig. 10A: eine perspektivische Darstellung der Verschlussvorrichtung in einer Öffnungsstellung;
- Fig. 10B: eine teilweise freigeschnittene Seitenansicht der Verschlussvorrichtung in der Öffnungsstellung;
- Fig. 11A: eine perspektivische Ansicht der Verschlussvorrichtung beim Schließen;
- Fig. 11B: eine teilweise freigeschnittene Seitenansicht der Verschlussvorrichtung beim Schließen;
- Fig. 12A: eine perspektivische Ansicht der Verschlussvorrichtung beim weiteren Schließen;
- Fig. 12B: eine teilweise freigeschnittene Seitenansicht der Verschlussvorrichtung beim weiteren Schließen;
- Fig. 13A: eine perspektivische Ansicht der Verschlussvorrichtung beim Einführen eines Eingriffselements des einen Verschlussteils in einen Führungsabschnitt des anderen Verschlussteils;
- Fig. 13B: eine teilweise freigeschnittene Seitenansicht der Anordnung gemäß Fig. 13A;
- Fig. 14A: eine perspektivische Ansicht der Verschlussvorrichtung in einer Schließstellung;
- Fig. 14B: eine teilweise freigeschnittene Seitenansicht der Verschlussvorrichtung in der Schließstellung;
- Fig. 15A: eine perspektivische Ansicht der Verschlussvorrichtung beim Öffnen;
- Fig. 15B: eine teilweise freigeschnittene Seitenansicht der Verschlussvorrichtung beim Öffnen;
- Fig. 16A: eine perspektivische Ansicht der Verschlussvorrichtung beim weiteren Öffnen; und
- Fig. 16B: eine teilweise freigeschnittene Seitenansicht der Verschlussvorrichtung beim weiteren Öffnen.

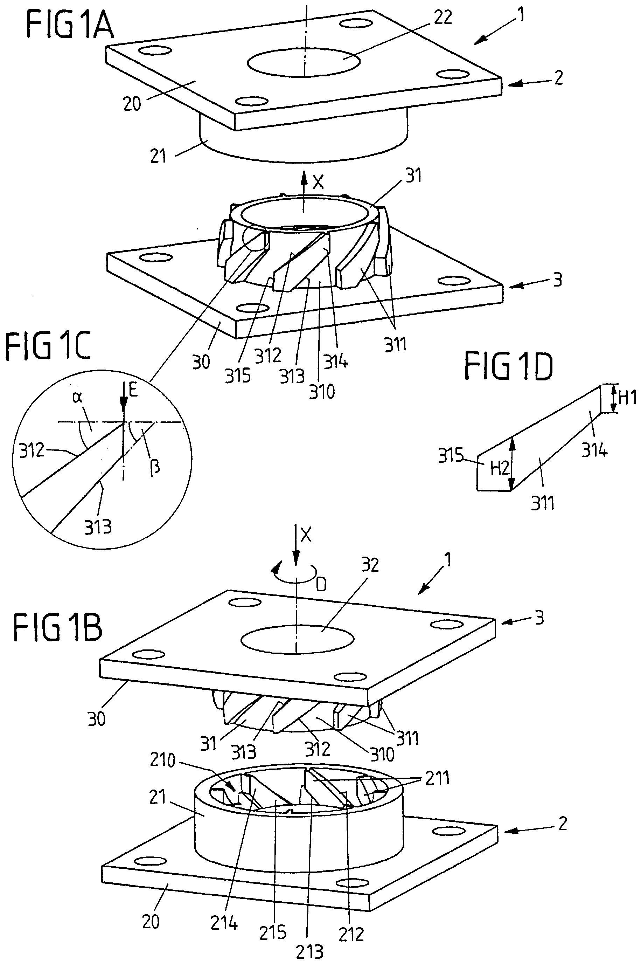

Fig. 1A, 1B zeigen ein Ausführungsbeispiel einer Verschlussvorrichtung 1, das ein erstes Verschlussteil 2 in Form eines weiblichen Teils und ein zweites Verschlussteil 3 in Form eines männlichen Teils aufweist. Jedes Verschlussteil 2, 3 weist ein Ansetzteil 21, 31 auf, die entlang einer Schließrichtung X aneinander angesetzt werden können.

Während das eine Verschlussteil 2 ein Ansetzteil 21 mit einer inneren Öffnung 210 aufweist, ist das Ansetzteil 31 des anderen Verschlussteils 3 nach Art eines Zapfens geformt, das in die Schließrichtung X in das Ansetzteil 21 des ersten Verschlussteils 2 eingesetzt werden kann.

An einer inneren Mantelfläche der Öffnung 210 sind Gewindegänge 211 ausgebildet, die beim Ansetzen der Verschlussteile 2, 3 aneinander in Gewindeeingriff mit Gewindegängen 311 an einer äußeren Mantelfläche 310 des Ansetzteils 31 des zweiten Verschlussteils 3 gebracht werden können.

Bei Ansetzen der Verschlussteile 2, 3 aneinander laufen die Gewindegänge mit geradlinigen Führungsflächen 212, 312 aufeinander auf, wobei die Führungsflächen 212, 312 eine Steigung α aufweisen, die so groß ist, dass der Gewindeeingriff der Gewinde miteinander nicht selbsthemmend ist.

An jedem Verschlussteil 2, 3 ist ein Magnetelement 22, 32 in Form eines Permanentmagneten ausgebildet. Die Magnetelemente 22, 32 stehen sich magnetisch anziehend gegenüber und unterstützen das Ansetzen der Verschlussteile 2, 3 aneinander derart, dass beim Ansetzen die Gewindegänge 211, 311 aufeinander auflaufen und die Verschlussteile 2, 3 selbsttätig in eine Drehrichtung D unter Anlage der Gewindegänge 211, 311 aneinander verdreht werden.

An rückwärtigen Führungsflächen 213, 313 kommen die Gewindegänge 211, 311 miteinander in Anlage, wenn die Verschlussteile 2, 3 zum Öffnen der Verschlussvorrichtung 1 zurück verdreht werden. Auch diese Führungsflächen sind geradlinig ausgebildet, weisen aber, wie schematisch in Fig. 1C veranschaulicht, eine andere Steigung β als die Steigung α der Führungsflächen 212, 312 auf.

Wie schematisch in Fig. 1B veranschaulicht, variiert die Höhe H1, H2 der Gewindegänge 211, 311 derart, dass die Gewindegänge 211, 311 an einem ersten Ende 214, 314 eine geringere Höhe H1 als an einem zweiten Ende 215, 315 aufweisen.

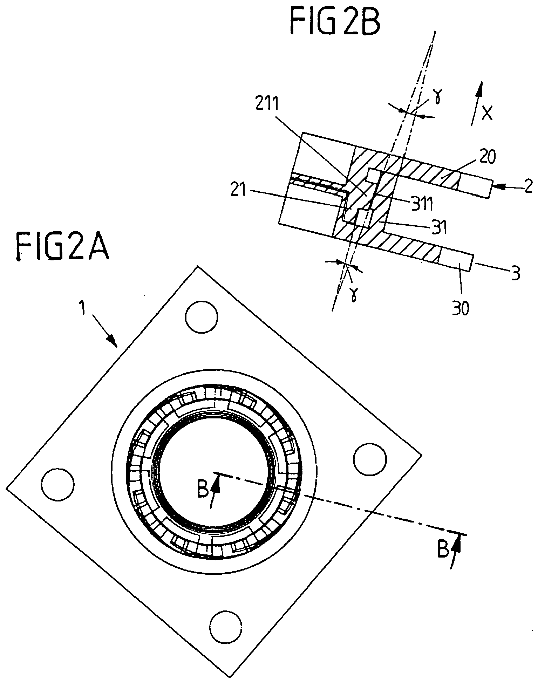

Bei dem Ausführungsbeispiel gemäß Fig. 2A, 2B sind die Ansetzteile insbesondere an ihren Gewindegängen 211, 311 zumindest abschnittsweise konisch geformt, derart, dass sich ein Winkel γ zur Schließrichtung X ergibt.

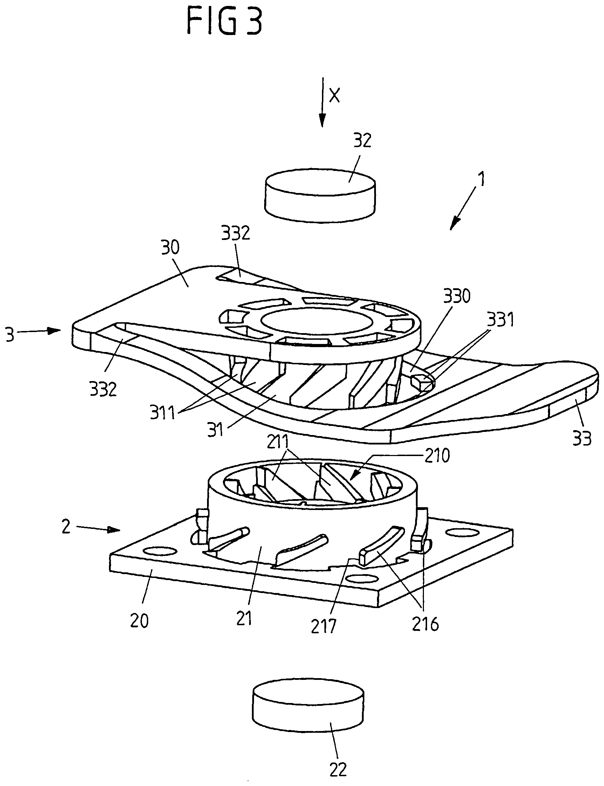

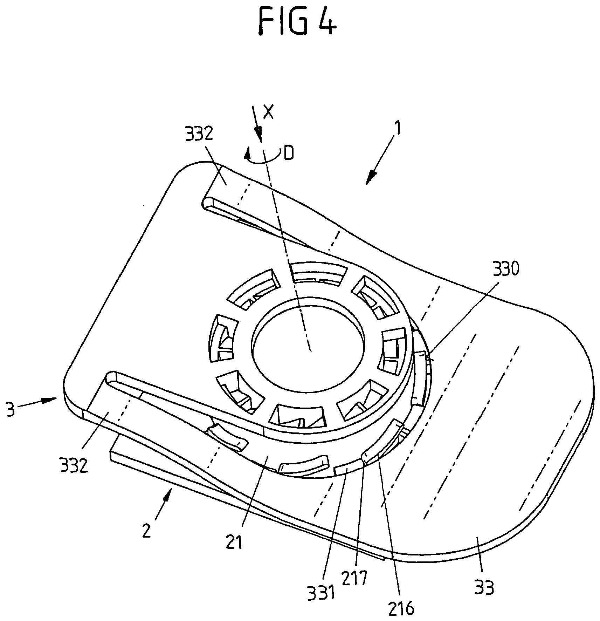

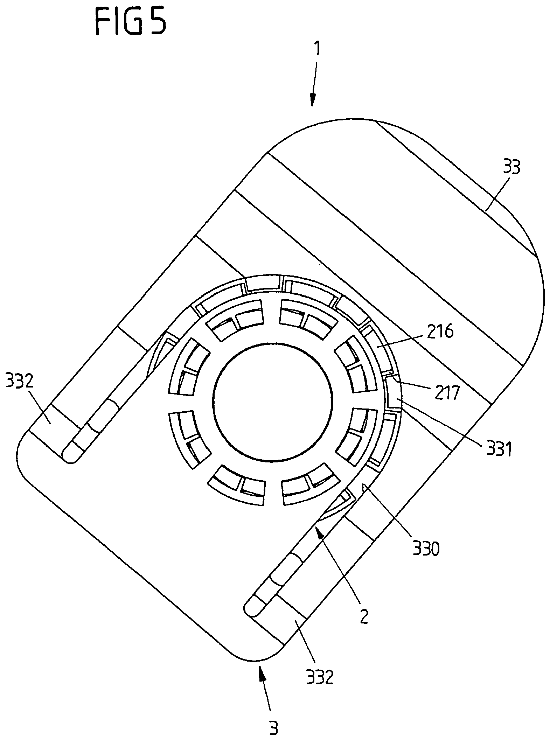

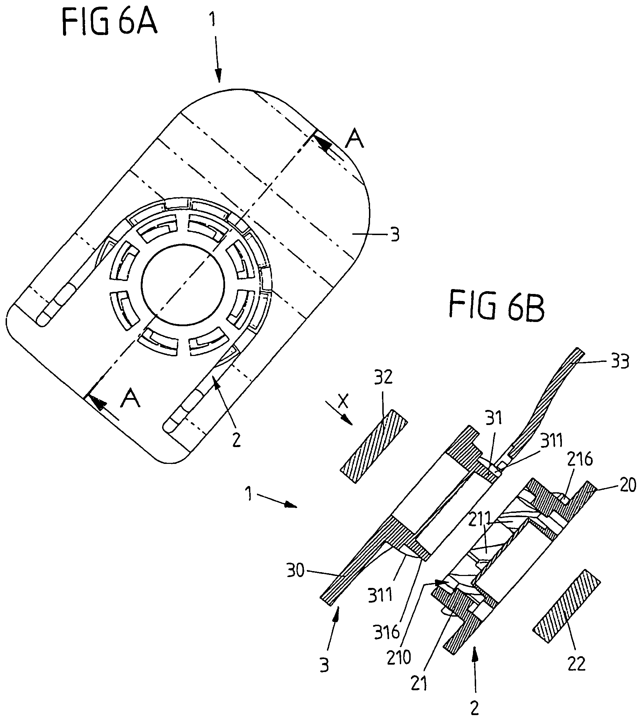

Bei dem Ausführungsbeispiel gemäß Fig. 3 bis 6A, 6B sind die Verschlussteile 2, 3 in verbundenem Zustand mechanisch miteinander verrastet, indem Vorsprungselemente 331 an einer Öffnung 330 eines Sperrhebels 33 des zweiten Verschlussteils 3 in verbundenem Zustand der Verschlussteile 2, 3 mit Anlageflächen 217 an äußeren Gewindegängen 216 außenseitig des ersten Ansetzteils 21 in Anlage treten, wie dies in Fig. 4 und 5 dargestellt ist. Der Sperrhebel 33 ist elastisch zu einem Gehäuseabschnitt 30 des zweiten Verschlussteils 3 verstellbar, so dass durch Betätigen des Sperrhebels 33 die Verrastung zum Öffnen der Verschlussvorrichtung 1 gelöst werden kann.

Bei dem Ausführungsbeispiel gemäß Fig. 3 bis 6A, 6B wird, zum Schließen der Verschlussvorrichtung 1, das zweite (männliche) Verschlussteil 3 in die Schließrichtung X an das erste (weibliche) Verschlussteil 2 angesetzt. Hierbei laufen die durch Gewindegänge ausgebildeten Eingriffselemente 311 des zweiten Verschlussteils 3 auf zugeordnete Gewindegänge 211 an der zylindrischen Innenmantelfläche innerhalb der Öffnung 210 des Ansetzteils 21 des ersten Verschlussteils 2 auf, wobei aufgrund der durch die Magnetelemente 22, 32 bewirkten Magnetkräfte die Verschlussteile 2, 3 selbsttätig zueinander verdreht und dadurch in Eingriff miteinander gebracht werden.

Beim Verdrehen der Verschlussteile 2, 3 zueinander zum Schließen der Verschlussvorrichtung 1 laufen - zusätzlich zu dem Auflaufen der inneren Gewindegänge 211, 311 aufeinander, die Vorsprungselemente 331 am inneren Rand der Öffnung 330 des Sperrhebels 33 auf die äußeren Gewindegängen 216 an der zylindrischen Außenmantelfläche des Ansetzteils 21 auf. Dies bewirkt, dass der zu dem Gehäuseabschnitt 30 elastische Sperrhebel 33 (geringfügig) entgegen der Schließrichtung X ausgelenkt wird und die Vorsprungselemente 331, nachdem sie die äußeren Gewindegängen 216 passiert haben, hinter die Anschlagflächen 217 schnappen und somit im Bereich der Anschlagflächen 217 zu liegen kommen, wie dies in Fig. 4 und 5 dargestellt ist.

Durch die Wechselwirkung zwischen den Vorsprungselementen 331 und den Anschlagflächen 217 der Gewindegänge 216 ist somit eine Drehbewegung der Verschlussteile 2, 3 entgegen der Drehrichtung D nicht ohne weiteres möglich. Vielmehr muss zum Öffnen der Verschlussvorrichtung 1 zunächst der Sperrhebel 33 gegenüber den Gewindegängen 216 angehoben werden, bis die Vorsprungselemente 331 aus dem Bereich der Anschlagflächen 217 gelangen. Erst dann können die Verschlussteile 2, 3 entgegen der Drehrichtung D zueinander verdreht werden, um die Verschlussvorrichtung 1 zu öffnen.

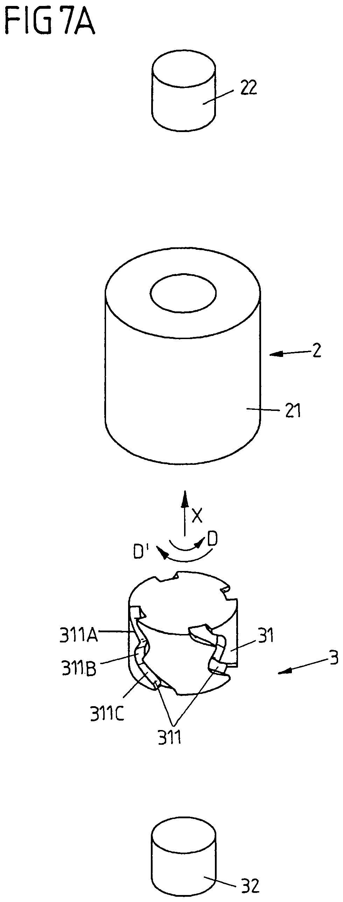

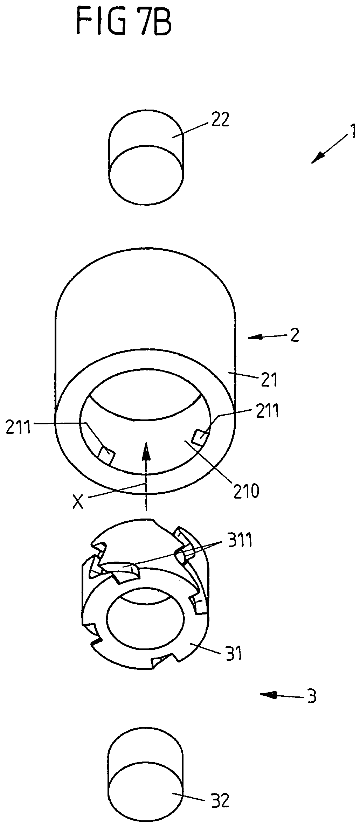

Bei dem Ausführungsbeispiel gemäß Fig. 7A, 7B weist das Ansetzteil 31 des zweiten Verschlussteils 3 Gewindegänge auf, die unterschiedliche Abschnitte 311A, 311B, 311C aufweisen, die unterschiedlich gerichtet sind. In der Öffnung 210 des Ansetzteils 21 des ersten Verschlussteils 2 sind zapfenförmige Eingriffselemente 211 ausgebildet, die bei Ansetzen der Verschlussteile 2. 3 aneinander mit den Gewindegängen 311 in Eingriff gelangen. Aufgrund der unterschiedlichen Abschnitte der Gewindegänge werden die Verschlussteile 2, 3 hierbei in unterschiedliche Drehrichtungen D, D' zueinander verdreht.

Dadurch, dass die Gewindegänge 311 Stufen aufweisen, wird insbesondere ein unbeabsichtigtes Öffnen der Verschlussvorrichtung 1 aus ihrem verbundenen Zustand vermieden.

Die Steigung der Gewindegänge 311 in den unterschiedlichen Abschnitten 311A, 311B, 311C ist derart, dass die Verschlussteile 2, 3 bei Ansetzen aneinander selbsttätig in die Schließrichtung X miteinander in Eingriff gezogen werden, aufgrund der magnetisch anziehenden Wechselwirkung zwischen den Magnetelementen 22, 32 auf Seiten des ersten Verschlussteils 2 einerseits und des zweiten Verschlussteils 3 andererseits.

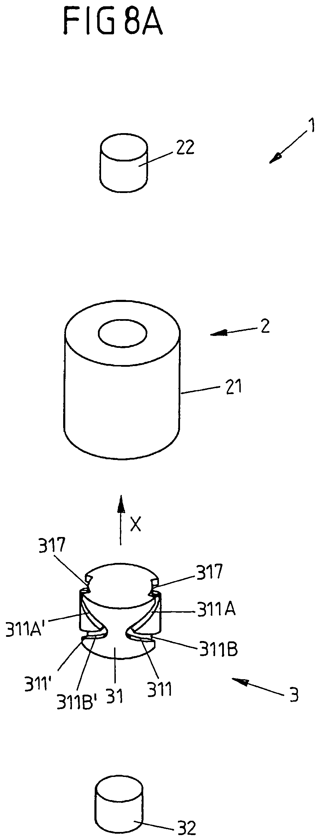

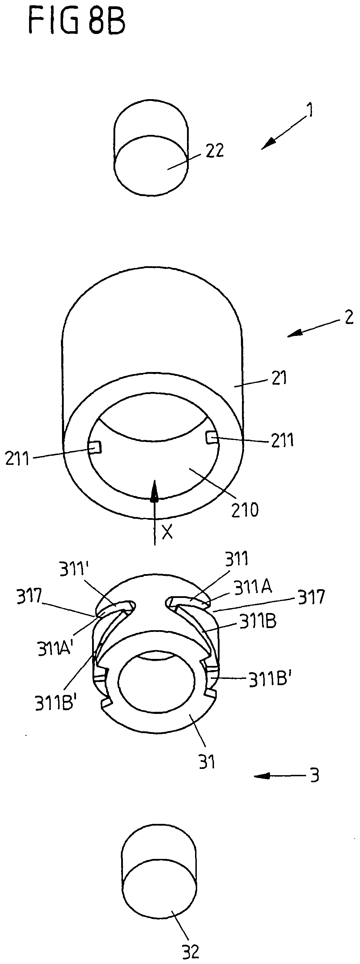

Beim Ausführungsbeispiel gemäß Fig. 8A, 8B weist jeder Gewindegang 311 einen komplementären Gewindegang 311' auf der gerade spiegelsymmetrisch geformt ist, so dass die Verschlussteile 2, 3 links- oder rechtsdrehend aneinander angesetzt werden können. Jeder Gewindegang 311 und jeder komplementäre Gewindegang 311' weist hierbei zwei unterschiedliche Abschnitte 311A, 311B, 311A', 311B' auf, die unterschiedlich gerichtet sind.

Bei Ansetzen des ersten Verschlussteils 3 an das zweite Verschlussteile 2 in die Schließrichtung X werden Eingriffselemente 211 innerhalb der Öffnung 210 des ersten Verschlussteils 2 jeweils in eine Eintrittsstelle 317, die den Gewindegängen 311, 311' gemeinsam ist, eingesetzt. Die Eingriffselemente 211 können jeweils nunmehr entweder rechtsdrehend in den Abschnitt 311A des einen Gewindegangs 311 oder linksdrehend in den Abschnitt 311A' des anderen, komplementären Gewindegangs 311' eingeführt werden. Nach Durchlaufen dieses ersten Abschnitts 311A, 311A' durchlaufen die Eingriffselemente 211 dann, unterstützt durch die magnetische Anziehungskraft der Magnetelemente 22, 32, den anschließenden, umgekehrt gerichteten Abschnitt 311B, 311B', so dass die Verschlussteile 2, 3 nach Passieren der Gewindegänge 311, 311' in eine Schließstellung gelangen.

Das Öffnen der Verschlussvorrichtung 1 ist wiederum in unterschiedliche Drehrichtungen möglich. So kann zum Öffnen der Verschlussvorrichtung 1 das erste Verschlussteil 2 derart gegenüber dem zweiten Verschlussteil 3 verdreht werden, dass die Eingriffselemente 211 - rechtsdrehend - zunächst in die Abschnitte 311B des einen Gewindegangs 311 oder - linksdrehend - in die Abschnitte 311B' des anderen, komplementären Gewindegangs 311' einlaufen. Nach Durchlaufen des jeweiligen Abschnitts 311B, 311B' gelangen die Eingriffselemente 211 sodann wiederum in den umgekehrt gerichteten, anschließenden Abschnitt 311A, 311A', nach dessen Passieren die Eingriffselemente 211 an den Eintrittsstellen 317 aus den jeweiligen Gewindegängen 311, 311' austreten und die Verschlussteile 2, 3 somit voneinander getrennt werden können.

Durch das Vorsehen der Gewindegänge 311 und der diesen zugeordneten komplementären Gewindegänge 311' wird ein Schließen der Verschlussvorrichtung 1 durch Ansetzen der Verschlussteile 2, 3 aneinander und durch Verdrehen der Verschlussteile 2, 3 in unterschiedliche anfängliche Drehrichtungen zueinander, also anfänglich linksdrehend oder anfänglich rechtsdrehend, möglich. Nach Durchlaufen eines ersten Abschnitts 311A, 311A' (beim Schließen) bzw. 311B, 311B' (beim Öffnen) kehrt sich dann die Drehrichtung um, bedingt durch die umgekehrte Ausrichtung der Abschnitte 311A, 311B, 311A', 311B' eines jeden Gewindegangs 311, 311' zueinander.

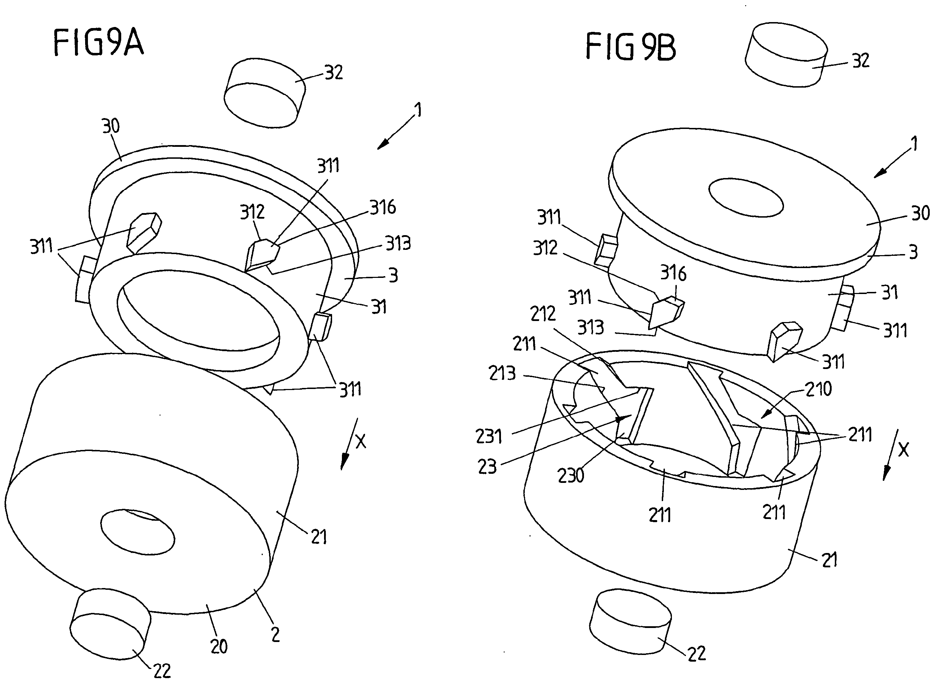

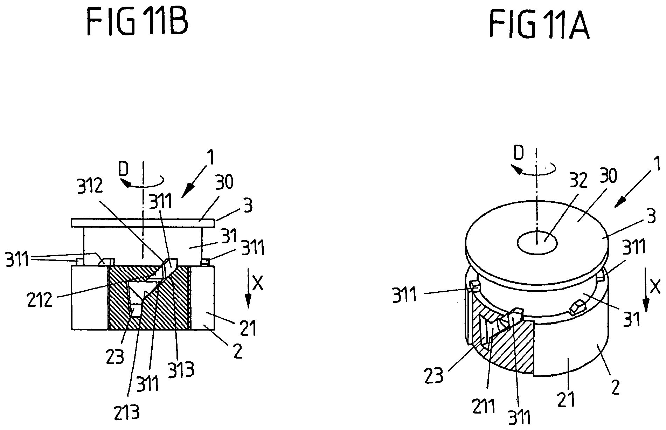

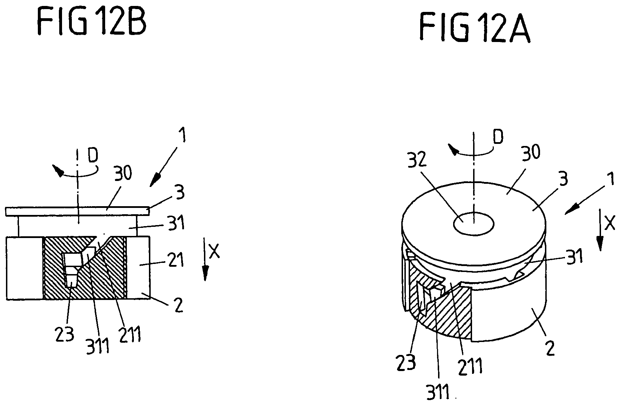

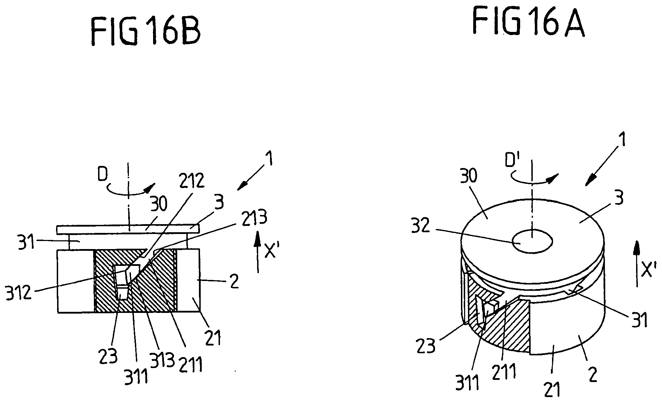

Fig. 9A, 9B bis 16A, 16B zeigen ein weiteres Ausführungsbeispiel einer Verschlussvorrichtung 1, die zwei Verschlussteile 2, 3 aufweist, die zum Schließen der Verschlussvorrichtung 1 in eine Schließrichtung X aneinander angesetzt werden können. Ein erstes Verschlussteil 3 stellt hierbei ein weibliches Teil dar, das an einem Ansetzteil 21 eine Öffnung 210 aufweist, in die ein zweites Verschlussteil 3 in Form eines männlichen Teils mit einem zapfenförmigen Ansetzteil 31 eingesetzt werden kann.

Bei diesem Ausführungsbeispiel sind an dem Ansetzteil 31 des zweiten Verschlussteils 3 Eingriffselemente 311 in Form von Vorsprüngen ausgebildet, die bei Ansetzen der Verschlussteile 2, 3 aneinander mit Gewindegängen 211 an der inneren Mantelfläche der Öffnung 210 des Ansetzteils 21 des ersten Verschlussteils 2 in Eingriff gelangen und somit in die Gewindegänge 311 einlaufen.

Die Eingriffselemente 311 weisen hierbei jeweils zwei parallel zueinander gerichtete, schräg erstreckte Führungsflächen 312, 313 auf, die bei Einlaufen in die Gewindegänge 211 mit die Gewindegänge 211 begrenzenden Führungsflächen 212, 213 in Anlage gelangen. Die Steigung der Gewindegänge 211 ist hierbei derart, dass bei Ansetzen der Verschlussteile 2, 3 aneinander die Eingriffselemente 311 selbsttätig aufgrund der magnetischen Anziehungskraft von Magnetelementen 22, 32 der Verschlussteile 2, 3 entlang der Gewindegänge 211 gleiten und somit die Verbindung zwischen den Verschlussteilen 2, 3 selbsttätig hergestellt wird.

An die Gewindegänge 211, in die die Eingriffselemente 311 bei Ansetzen der Verschlussteile 2, 3 aneinander einlaufen, schließt jeweils ein Führungsabschnitt 23 an, der vertikal entlang der Schließrichtung X erstreckt ist und eine Falle für das jeweils zugeordnete Eingriffselement 311 darstellt. Nach Passieren des zugeordneten Gewindegangs 211 läuft das Eingriffselement 311 in den an den Gewindegang 211 anschließenden Führungsabschnitt 23 ein und wird aufgrund der magnetischen Anziehungskraft zwischen den Magnetelementen 22, 32 in einen Aufnahmeabschnitt 230 des Führungsabschnitts 23 hineingezogen, so dass das Eingriffselement 311 in der Schließstellung der Verschlussvorrichtung 1 in dem Aufnahmeabschnitt 130 des Führungsabschnitts 23 einliegt.

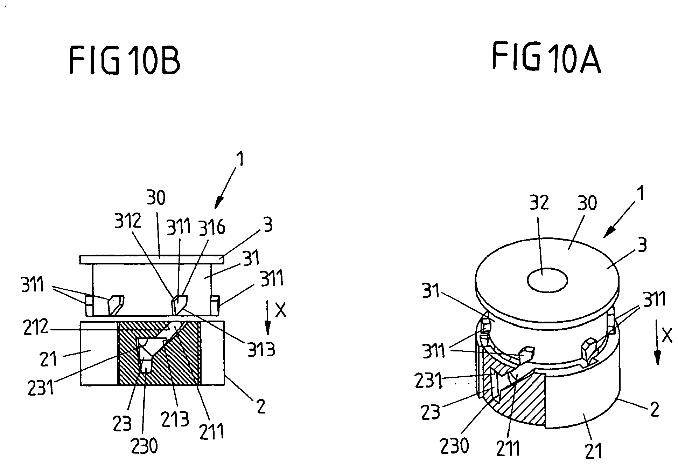

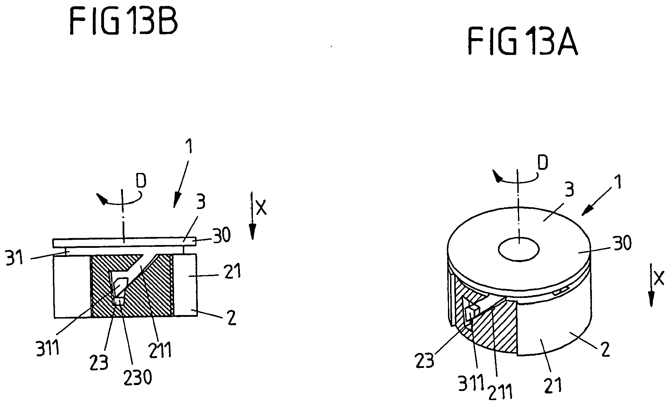

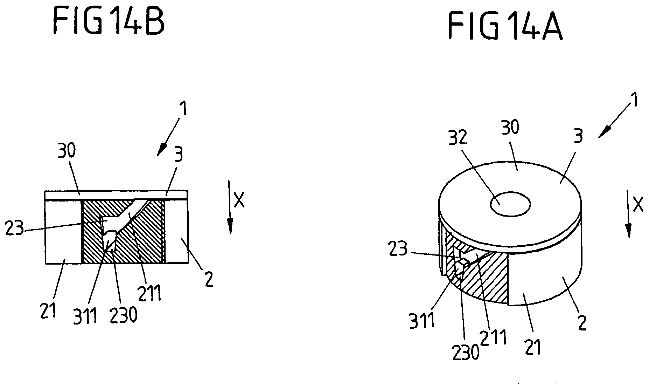

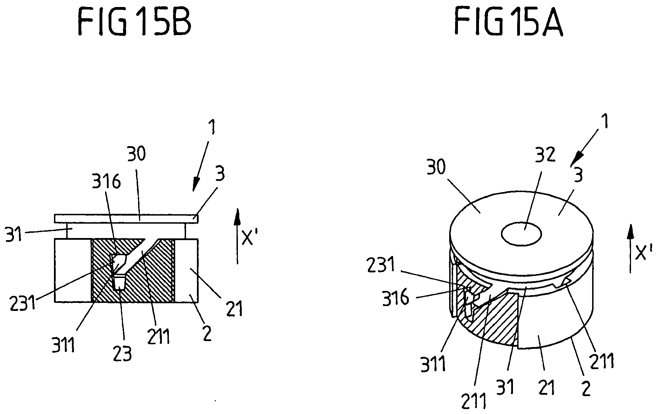

Die Verschlussvorrichtung 1 beim Schließen ist in unterschiedlichen Ansichten in Fig.10A, 10B bis 13A, 13B dargestellt. Fig. 14A, 14B zeigt die Verschlussvorrichtung 1 in ihrer Schließstellung. Fig. 15A, 15B und 16A, 16B zeigen sodann die Verschlussvorrichtung 1 beim Öffnen.

Die Ansichten gemäß Fig. 10A, 10B bis 16A, 16B zeigen hierbei zum einen perspektivische Ansichten (Fig. 10A ... 16A) und zum anderen Seitenansichten (Fig. 10B ... 16B). Jeweils ist hierbei das erste Verschlussteil 2 im Bereich eines Gewindegangs 211 teilweise freigeschnitten, so dass sichtbar ist, wie ein zugeordnetes Eingriffselement 311 des zweiten Verschlussteils 3 sich innerhalb des Gewindegangs 211 bewegt, wenn die Verschlussvorrichtung 1 geschlossen oder geöffnet wird.

Dadurch, dass jedes Eingriffselement 311 in der Schließstellung (Fig. 14A, 14B) in dem Aufnahmeabschnitt 230 des an den zugeordneten Gewindegang 211 anschließenden Führungsabschnitts 23 einliegt, ist in der Schließstellung ein Verdrehen der Verschlussteile 2, 3 zueinander gesperrt. Insbesondere kann das zweite Verschlussteil 3 nicht entgegen der Drehrichtung D zu dem ersten Verschlussteil 2 verdreht werden, so dass ein (ungewolltes) Öffnen der Verschlussvorrichtung 1 verhindert ist.

Zum Öffnen der Verschlussvorrichtung 1 ist erforderlich, zunächst das zweite Verschlussteil 3 entgegen der Schließrichtung X, also in die entgegengesetzte Richtung X', relativ zu dem ersten Verschlussteil 2 zu verstellen, um auf diese Weise jedes Eingriffselement 311 in dem zugeordneten Führungsabschnitt 23 in die Richtung X' anzuheben, wie dies in Fig. 15A, 15B dargestellt ist. Der Führungsabschnitt 23 ist hierbei durch eine Anschlagfläche 231 entgegen der Schließrichtung X, also in die Richtung X', begrenzt, so dass beim Öffnen der Verschlussvorrichtung 1 das zugeordnete Eingriffselement 311 mit einer Anschlagfläche 316 in Anlage mit dieser Anschlagfläche 231 gelangt, wenn das zweite Verschlussteil 3 in die Richtung X' zu dem ersten Verschlussteil 2 bewegt wird. Ein weiteres Bewegen des zweiten Verschlussteils 3 in die Richtung X' ist auf diese Weise verhindert, und insbesondere kann somit die Verschlussvorrichtung 1 nicht alleine dadurch, dass an den Verschlussteilen 2, 3 gezogen wird, geöffnet werden.

Vielmehr ist erforderlich, dass nach Anheben der Eingriffselemente 311 innerhalb der Führungsabschnitte 23 die Verschlussteile 2, 3 in die der Drehrichtung D entgegengesetzte Drehrichtung D' zueinander verdreht werden, so dass die Eingriffselemente 311 entlang der Gewindegänge 211 gleiten und die Verschlussteile 2, 3 somit voneinander getrennt werden, wie dies in Fig. 16A, 16B dargestellt ist.

Sind die Eingriffselemente 311 aus dem Bereich der Gewindegänge 211 herausgedreht worden, können die Verschlussteile 2, 3 voneinander entnommen werden.

In der Schließstellung gemäß Fig. 14A, 14B werden die Verschlussteile 2, 3 aufgrund der magnetischen Anziehungskräfte aneinander gehalten, so dass die Eingriffselemente 311 in den Aufnahmeabschnitten 230 der Führungsabschnitte 23 magnetisch gehalten werden. Ein ungewolltes, unbewusstes Öffnen der Verschlussvorrichtung 1 ist somit zumindest erschwert. Zum Öffnen muss ein Nutzer die Verschlussteile 2, 3 entgegen der wirkenden magnetischen Anziehungskraft der Magnetelemente 22, 32 voneinander entfernen, so dass die Eingriffselemente 311 in die Richtung X' innerhalb der Führungsabschnitte 23 gleiten, und muss sodann die Verschlussteile 2, 3 in die Drehrichtung D' zueinander verdrehen, um damit die Verschlussvorrichtung 1 zu öffnen.

Die Magnetelemente 22, 32 können jeweils als Permanentmagnet ausgebildet sein, wobei die Magnetelemente 22, 32 mit ungleichnamigen Polen aufeinander zu weisen und somit das Ansetzen der Verschlussteile 2, 3 aneinander magnetisch unterstützt wird.

Ebenso ist denkbar und möglich, dass eins der Magnetelemente 22, 32 als Permanentmagnet und das andere der Magnetelemente 22, 32 als magnetischer Anker aus ferromagnetischem Material, aber ohne eigene Permanentmagnetwirkung, ausgebildet ist.

Zudem ist denkbar und möglich, dass die Magnetelemente 22, 32 jeweils in einer Ebene quer zur Schließrichtung X mehrere zueinander versetzte Pole aufweisen. Auf diese Weise bewirken die Magnetelemente 22, 32 nicht nur eine magnetische Anziehungskraft in die Schließrichtung X, sondern können auch das Verdrehen der Verschlussteile 2, 3 unterstützen. Beispielsweise kann jedes Magnetelement 22, 32 in einer Ebene quer zur Schließrichtung X zwei ungleichnamige Magnetpolen aufweisen, so dass bei Ansetzen der Verschlussteile 2, 3 aneinander auch ein magnetisches Drehmoment zum Unterstützen der Schließbewegung bewirkt wird.

Eine Verschlussvorrichtung der hier beschriebenen Art lässt sich nicht nur zum Verbinden eines elektronischen Geräts mit einer Halteeinrichtung einsetzen, sondern auch für gänzlich andere Einsatzzwecke. Generelle ist eine Verschlussvorrichtung der hier beschriebenen Art zum Verbinden zweier Teile miteinander verwendbar.

### Bezugszeichenliste

- 1: Verschlussvorrichtung
- 2: Verschlussteil (weibliches Teil)
- 20: Gehäuseteil
- 21: Ansetzteil
- 210: Öffnung
- 211: Gewindegänge
- 212, 213: Führungsfläche
- 214, 215: Ende
- 216: Sperrelemente
- 217: Anschlagfläche
- 218: Seite
- 22: Magnetelement
- 23: Führungsabschnitt
- 230: Aufnahmeabschnitt
- 231: Anschlagfläche
- 3: Verschlussteil (männliches Teil)
- 30: Gehäuseteil
- 31: Ansetzteil
- 310: Öffnung
- 311: Gewindegänge
- 311A-C: Abschnitt
- 312, 313: Führungsfläche
- 314, 315: Ende
- 316: Anschlagfläche
- 317: Eintrittstelle
- 318: Außenseite
- 32: Magnetelement
- 33: Sperrhebel
- 330: Öffnung
- 331: Vorsprungselemente
- 332: Verbindungsarme
- α, β: Steigungswinkel
- D, D': Drehrichtung
- H1, H2: Höhe
- X: Schließrichtung

## Patentansprüche

1. Verschlussvorrichtung (1) zum Befestigen eines elektronischen Geräts an einer Halteeinrichtung, mit
- einem ersten Verschlussteil (2), das ein erstes Ansetzteil (21) aufweist,
- einem zweiten Verschlussteil (3), das ein zweites Ansetzteil (31) aufweist und das in eine Schließrichtung (X) an das erste Verschlussteil (2) ansetzbar ist, wobei an einem der Ansetzteile (21, 31) mindestens ein Gewindegang (211, 311) und an dem anderen der Ansetzteile (31, 21) mindestens ein Eingriffselement (311, 211) zum Auflaufen auf den mindestens einen Gewindegang (211, 311) beim Ansetzen der Verschlussteile (2, 3) aneinander angeordnet ist, und
- einer Magneteinrichtung (22, 32), die beim Ansetzen magnetisch anziehend zwischen dem ersten Verschlussteil (2) und dem zweiten Verschlussteil (3) wirkt, wobei der mindestens eine Gewindegang (211, 311) eine derartige Steigung (α) aufweist, dass beim Ansetzen der Verschlussteile (2, 3) aneinander aufgrund der magnetisch anziehenden Wirkung der Magneteinrichtung (22, 32) der mindestens eine Gewindegang und das mindestens eine Eingriffselement (311, 211) aufeinander auflaufen und die Verschlussteile (2, 3) dadurch selbsttätig in eine Drehrichtung (D) um die Schließrichtung (X) zueinander verdreht werden,
**dadurch gekennzeichnet,**
**dass** in einem verbundenen Zustand, in dem die Verschlussteile (2, 3) aneinander angesetzt sind, die Verschlussteile (2, 3) gegen ein Verdrehen entgegen der Drehrichtung (D) mechanisch zueinander verrastet sind.

2. Verschlussvorrichtung nach Anspruch 1, **dadurch gekennzeichnet, dass** an dem ersten Ansetzteil (21) und dem zweiten Ansetzteil (31) jeweils mindestens ein Gewindegang angeordnet ist, die beim Ansetzen der Verschlussteile (2, 3) aneinander aufeinander auflaufen.

3. Verschlussvorrichtung nach Anspruch 1 oder 2, **dadurch gekennzeichnet, dass** die Magneteinrichtung (22, 32) in einem verbundenen Zustand, in dem die Verschlussteile (2, 3) aneinander angesetzt sind, einem Verdrehen der Verschlussteile (2, 3) zueinander entgegen der Drehrichtung (D) entgegen wirkt.

4. Verschlussvorrichtung nach einem der Ansprüche 1 bis 3, **dadurch gekennzeichnet, dass** in dem verbundenen Zustand ein Vorsprungselement (331) eines der Verschlussteile (3) mit einer Anlagefläche (217) des anderen der Verschlussteile (2) entgegen der Drehrichtung (D) in Anlage ist.

5. Verschlussvorrichtung nach Anspruch 4, **dadurch gekennzeichnet, dass** das Vorsprungselement (331) an einem Sperrhebel (33) ausgebildet ist, das derart elastisch mit einem Gehäuseteil (30) des zugeordneten Verschlussteils (3) verbunden ist, dass das Vorsprungselement (331) zum Aufheben der Anlage zu der Anlagefläche (217) verstellbar ist.

6. Verschlussvorrichtung nach einem der vorangehenden Ansprüche, **dadurch gekennzeichnet, dass** das erste Ansetzteil (21) und/oder das zweite Ansetzteil (31) zumindest abschnittsweise konisch zur Schließrichtung (X) geformt sind.

7. Verschlussvorrichtung nach einem der vorangehenden Ansprüche, **dadurch gekennzeichnet, dass** der zumindest eine Gewindegang (211, 311) an einer dem Ansetzteil (31, 21) des anderen Verschlussteils (2, 3) zugewandten Seite (218, 318) unter einem Winkel zur Schließrichtung (X) geneigt ist.

8. Verschlussvorrichtung nach einem der vorangehenden Ansprüche, **dadurch gekennzeichnet, dass** der mindestens eine Gewindegang (211, 311) an einem ersten Ende (214, 314) eine kleinere Höhe (H1) - gemessen entlang der Schließrichtung (X) - als an einem zweiten Ende (214, 314) aufweist.

9. Verschlussvorrichtung (1) zum Befestigen eines elektronischen Geräts an einer Halteeinrichtung, mit
- einem ersten Verschlussteil (2), das ein erstes Ansetzteil (21) aufweist,
- einem zweiten Verschlussteil (3), das ein zweites Ansetzteil (31) aufweist und das in eine Schließrichtung (X) an das erste Verschlussteil (2) ansetzbar ist, wobei an einem der Ansetzteile (21, 31) mindestens ein Gewindegang (211, 311) und an dem anderen der Ansetzteile (31, 21) mindestens ein Eingriffselement (311, 211) zum Auflaufen auf den mindestens einen Gewindegang (211, 311) beim Ansetzen der Verschlussteile (2, 3) aneinander angeordnet ist, und
- einer Magneteinrichtung (22, 32), die beim Ansetzen magnetisch anziehend zwischen dem ersten Verschlussteil (2) und dem zweiten Verschlussteil (3) wirkt, wobei der mindestens eine Gewindegang (211, 311) eine derartige Steigung (α) aufweist, dass beim Ansetzen der Verschlussteile (2, 3) aneinander aufgrund der magnetisch anziehenden Wirkung der Magneteinrichtung (22, 32) der mindestens eine Gewindegang und das mindestens eine Eingriffselement (311, 211) aufeinander auflaufen und die Verschlussteile (2, 3) dadurch selbsttätig in eine Drehrichtung (D) um die Schließrichtung (X) zueinander verdreht werden,
**dadurch gekennzeichnet,**
**dass** der mindestens eine Gewindegang (311) einen ersten Abschnitt (311A) und einen zweiten Abschnitt (311B) aufweist, wobei die Abschnitte (311A, 311B) unterschiedliche Steigungen und/oder Richtungen aufweisen.

10. Verschlussvorrichtung nach Anspruch 9, **dadurch gekennzeichnet, dass** bei Ansetzen der Verschlussteile (2, 3) aneinander
- bei Eingriff des mindestens einen Eingriffselements (211) in den ersten Abschnitt (311A) die Verschlussteile (2, 3) in eine erste Drehrichtung (D) und
- bei Eingriff des mindestens einen Eingriffselements (211) in den zweiten Abschnitt (311B) die Verschlussteile (2, 3) in eine der ersten Drehrichtung (D) entgegen gesetzte, zweite Drehrichtung (D')
zueinander verdreht werden.

11. Verschlussvorrichtung nach einem der vorangehenden Ansprüche, **dadurch gekennzeichnet, dass** an dem einen der Ansetzteile (21, 31) ein zu dem mindestens einen Gewindegang (211, 311) komplementärer Gewindegang (211A, 311A) angeordnet ist, der derart spiegelsymmetrisch zu dem mindestens einen Gewindegang (211, 311) geformt ist, dass die Verschlussteile (2, 3) bei Ansetzen aneinander in die Drehrichtung (D) oder auch entgegen der Drehrichtung (D') zueinander verdreht werden können.

12. Verschlussvorrichtung (1) zum Befestigen eines elektronischen Geräts an einer Halteeinrichtung, mit
- einem ersten Verschlussteil (2), das ein erstes Ansetzteil (21) aufweist,
- einem zweiten Verschlussteil (3), das ein zweites Ansetzteil (31) aufweist und das in eine Schließrichtung (X) an das erste Verschlussteil (2) ansetzbar ist, wobei an einem der Ansetzteile (21, 31) mindestens ein Gewindegang (211, 311) und an dem anderen der Ansetzteile (31, 21) mindestens ein Eingriffselement (311, 211) zum Auflaufen auf den mindestens einen Gewindegang (211, 311) beim Ansetzen der Verschlussteile (2, 3) aneinander angeordnet ist, und
- einer Magneteinrichtung (22, 32), die beim Ansetzen magnetisch anziehend zwischen dem ersten Verschlussteil (2) und dem zweiten Verschlussteil (3) wirkt, wobei der mindestens eine Gewindegang (211, 311) eine derartige Steigung (α) aufweist, dass beim Ansetzen der Verschlussteile (2, 3) aneinander aufgrund der magnetisch anziehenden Wirkung der Magneteinrichtung (22, 32) der mindestens eine Gewindegang und das mindestens eine Eingriffselement (311, 211) aufeinander auflaufen und die Verschlussteile (2, 3) dadurch selbsttätig in eine Drehrichtung (D) um die Schließrichtung (X) zueinander verdreht werden,
**dadurch gekennzeichnet,**
**dass**, betrachtet in die Drehrichtung (D), an den mindestens einen Gewindegang (211) ein Führungsabschnitt (23) anschließt, in den das Eingriffselement (311) nach Passieren des Gewindegangs (211) in die Schließrichtung (X) einführbar ist.

13. Verschlussvorrichtung nach Anspruch 12, **dadurch gekennzeichnet, dass** das Eingriffselement (23) in einer Schließstellung, in der das erste Verschlussteil (2) und das zweite Verschlussteil (3) aneinander angesetzt sind, in dem Führungsabschnitt (23) einliegt und dadurch ein Verdrehen der Verschlussteile (2, 3) zueinander entgegen der Drehrichtung (D) gesperrt ist.

14. Verschlussvorrichtung nach Anspruch 12 oder 13, **dadurch gekennzeichnet, dass** der Führungsabschnitt (23) eine quer zur Schließrichtung (X) erstreckte Anschlagfläche (231) aufweist, die den Führungsabschnitt (23) entgegen der Schließrichtung (X) begrenzt, wobei das Eingriffselement (311) bei Bewegung entgegen der Schließrichtung (X) innerhalb des Führungsabschnitts (23) an der Anschlagfläche (231) anschlägt.

15. Elektronisches Gerät mit einer Verschlussvorrichtung (1) nach einem der vorangehenden Ansprüche.

## Claims

1. A closure device (1) for securing an electronic device on a holding device, having
- a first closure part (2) having a first attaching part (21),
- a second closure part (3) having a second attaching part (31) and which can be attached to the first closure part (2) in a closing direction (X), wherein at least one thread (211, 311) is arranged on one of the attaching parts (21, 31) and at least one engaging element (311, 211) is arranged on the other of the attaching parts (31, 21) for running onto the at least one thread (211, 311) when attaching the closure parts (2, 3) to one another, and
- a magnetic device (22, 32) that acts in a magnetically attracting manner between the first closure part (2) and the second closure part (3) during the attaching process, wherein the at least one thread (211, 311) has a pitch (α) such that, when attaching the closure parts (2, 3) to one another, as a result of the magnetically attractive effect of the magnetic device (22, 32), the at least one thread and the at least one engaging element (311, 211) run onto one another, and the closure parts (2, 3) are thereby automatically twisted in relation to one another in a rotational direction (D) about the closing direction (X)
**characterized in that**
in a connected state in which the closure parts (2, 3) are set on each other the closure parts (2, 3) are mechanically interlocked to resist a twisting against the rotational direction (D).

2. The closure device as claimed in claim 1, **characterized in that** in each case at least one thread is arranged on the first attaching part (21) and the second attaching part (31), which threads run onto each other when the closure parts (2, 3) are set on each other.

3. The closure device as claimed in claim 1 or 2, **characterized in that** the magnetic device (22, 32) in a connected state in which the closure parts (2, 3) are set on each other resists a twisting of the closure parts (2, 3) relative to each other against the rotational direction (D).

4. The closure device as claimed in one of the claims 1 to 3, **characterized in that** in the connected state a protruding element (331) of one of the closure parts (3) bears against a bearing surface (217) of the other of the closure parts (2) against the rotational direction (D).

5. The closure device as claimed in claim 4, **characterized in that** the protruding element (331) is formed on a locking lever (33) which is elastically joined to a housing part (30) of the associated closure part (3) so that the protruding element (331) is movable to eliminate the contact with the bearing surface (217).

6. The closure device as claimed in one of the preceding claims, **characterized in that** the first attaching part (21) and/or the second attaching part (31) are formed conical to the closing direction (X), at least for a portion.

7. The closure device as claimed in one of the preceding claims, **characterized in that** the at least one thread (211, 311) on a side (218, 318) facing the attaching part (31, 21) of the other closure part (2, 3) is inclined at an angle to the closing direction (X) .

8. The closure device as claimed in one of the preceding claims, **characterized in that** the at least one thread (211, 311) at a first end (214, 314) - measured along the closing direction (X) - has a smaller height (H1) than at a second end (214, 314).

9. A closure device (1) for securing an electronic device on a holding device, having
- a first closure part (2) having a first attaching part (21),
- a second closure part (3) having a second attaching part (31) and which can be attached to the first closure part (2) in a closing direction (X), wherein at least one thread (211, 311) is arranged on one of the attaching parts (21, 31) and at least one engaging element (311, 211) is arranged on the other of the attaching parts (31, 21) for running onto the at least one thread (211, 311) when attaching the closure parts (2, 3) to one another, and
- a magnetic device (22, 32) that acts in a magnetically attracting manner between the first closure part (2) and the second closure part (3) during the attaching process, wherein the at least one thread (211, 311) has a pitch (α) such that, when attaching the closure parts (2, 3) to one another, as a result of the magnetically attractive effect of the magnetic device (22, 32), the at least one thread and the at least one engaging element (311, 211) run onto one another, and the closure parts (2, 3) are thereby automatically twisted in relation to one another in a rotational direction (D) about the closing direction (X)
**characterized in that**
the at least one thread (311) comprises a first segment (311A) and a second segment (311B), wherein the segments (311A, 311B) have different pitches and/or directions.

10. The closure device as claimed in claim 9, **characterized in that** when the closure parts (2, 3) are set on one another
- a twisting of the closure parts (2, 3) relative to each other in a first rotational direction (D) occurs upon engaging of the at least one engaging element (211) in the first segment (311A) and
- a twisting of the closure parts (2, 3) relative to each other in a second rotational direction (D'), opposite the first rotational direction (D), occurs upon engaging of the at least one engaging element (211) in the second segment (311B).

11. The closure device as claimed in one of the preceding claims, **characterized in that** there is arranged on one of the attaching parts (21, 31) a thread (211A, 311A) which is complementary to the at least one thread (211, 311), being formed in mirror symmetry to the at least one thread (211, 311), so that the closure parts (2, 3) when set on one another can be twisted relative to each other in the rotational direction (D) or also against the rotational direction (D').

12. A closure device (1) for securing an electronic device on a holding device, having
- a first closure part (2) having a first attaching part (21),
- a second closure part (3) having a second attaching part (31) and which can be attached to the first closure part (2) in a closing direction (X), wherein at least one thread (211, 311) is arranged on one of the attaching parts (21, 31) and at least one engaging element (311, 211) is arranged on the other of the attaching parts (31, 21) for running onto the at least one thread (211, 311) when attaching the closure parts (2, 3) to one another, and
- a magnetic device (22, 32) that acts in a magnetically attracting manner between the first closure part (2) and the second closure part (3) during the attaching process, wherein the at least one thread (211, 311) has a pitch (α) such that, when attaching the closure parts (2, 3) to one another, as a result of the magnetically attractive effect of the magnetic device (22, 32), the at least one thread and the at least one engaging element (311, 211) run onto one another, and the closure parts (2, 3) are thereby automatically twisted in relation to one another in a rotational direction (D) about the closing direction (X)
**characterized in that**
the at least one thread (211), viewed in the rotational direction (D), is adjoined by a guide segment (23), in which the engaging element (311) is introducible after passing through the thread (211) in the closing direction (X).

13. The closure device as claimed in claim 12, **characterized in that** in a closed position, in which the first closure part (2) and the second closure part (3) are set on each other, the engaging element (23) lies in the guide segment (23) and thereby a twisting of the closure parts (2, 3) relative to each other opposite the rotational direction (D) is blocked.

14. The closure device as claimed in claim 12 or 13, **characterized in that** the guide segment (23) has a bearing surface (231) extending transversely to the closing direction (X), which bounds off the guide segment (23) against the closing direction (X), wherein the engaging element (311) upon moving within the guide segment (23) against the closing direction (X) comes to bear against the bearing surface (231).

15. An electronic device with a closure device (1), as claimed in one of the preceding claims.

## Revendications

1. Dispositif de fermeture (1) servant à fixer un appareil électronique au niveau d'un système de retenue, avec
- une première partie de fermeture (2), qui présente une première partie rapportée (21),
- une deuxième partie de fermeture (3), qui présente une deuxième partie rapportée (31) et qui peut être placée au niveau de la première partie de fermeture (2) dans une direction de fermeture (X), dans lequel au moins une spire (211, 311) est disposée au niveau d'une des parties rapportées (21, 31) et au moins un élément de prise (311, 211) destiné à s'arrimer sur l'au moins une spire (211, 311) lors du placement l'une au niveau de l'autre des parties de fermeture (2, 3) est disposé au niveau de l'autre des parties rapportées (31, 21), et
- un système magnétique (22, 32), qui agit lors du placement avec une attraction magnétique entre la première partie de fermeture (2) et la deuxième partie de fermeture (3), dans lequel l'au moins une spire (211, 311) présente un pas (α) tel que lors du placement l'une au niveau de l'autre des parties de fermeture (2, 3), l'au moins une spire et l'au moins un élément de prise (311, 211) s'arriment l'un sur l'autre du fait de l'action d'attraction magnétique du système magnétique (22, 32) et les parties de fermeture (2, 3) sont tournées de ce fait de manière autonome l'une par rapport l'autre dans une direction de rotation (D) autour de la direction de fermeture (X),
**caractérisé en ce**
**que** dans un état assemblé, dans lequel les parties de fermeture (2, 3) sont placées l'une au niveau de l'autre, les parties de fermeture (2, 3) sont enclenchées mécaniquement l'une par rapport à l'autre à l'encontre d'une rotation dans le sens opposé à la direction de rotation (D).

2. Dispositif de fermeture selon la revendication 1, **caractérisé en ce qu'**est disposée, au niveau de la première partie rapportée (21) et de la deuxième partie rapportée (31), respectivement au moins une spire, lesquelles spires s'arriment les unes sur les autres lors du placement l'une au niveau de l'autre des parties de fermeture (2, 3).

3. Dispositif de fermeture selon la revendication 1 ou 2, **caractérisé en ce que** le système magnétique (22, 32) contrecarre, dans un état assemblé, dans lequel les parties de fermeture (2, 3) sont placées l'une au niveau de l'autre, une rotation des parties de fermeture (2, 3) l'une par rapport à l'autre dans le sens opposé à la direction de rotation (D).

4. Dispositif de fermeture selon l'une quelconque des revendications 1 à 3, **caractérisé en ce que** dans l'état assemblé, un élément faisant saillie (331) d'une des parties de fermeture (3) est en appui avec une face d'appui (217) de l'autre des parties de fermeture (2) dans le sens opposé à la direction de rotation (D).

5. Dispositif de fermeture selon la revendication 4, **caractérisé en ce que** l'élément faisant saillie (331) est réalisé au niveau d'un levier de blocage (33), qui est assemblé de manière élastique à une partie de boîtier (30) de la partie de fermeture (3) associée de telle manière que l'élément faisant saillie (331) peut être ajusté pour supprimer l'appui par rapport à la face d'appui (217).

6. Dispositif de fermeture selon l'une quelconque des revendications précédentes, **caractérisé en ce que** la première partie rapportée (21) et/ou la deuxième partie rapportée (31) sont formées au moins par endroits de manière conique par rapport à la direction de fermeture (X).

7. Dispositif de fermeture selon l'une quelconque des revendications précédentes, **caractérisé en ce que** l'au moins une spire (211, 311) est inclinée au niveau d'un côté (218, 318) tourné vers la partie rapportée (31, 21) de l'autre partie de fermeture (2, 3) selon un angle par rapport à la direction de fermeture (X).

8. Dispositif de fermeture selon l'une quelconque des revendications précédentes, **caractérisé en ce que** l'au moins une spire (211, 311) présente au niveau d'une première extrémité (214, 314), une hauteur (H) plus petite - mesurée le long de la direction de fermeture (X), qu'au niveau d'une deuxième extrémité (214, 314).

9. Dispositif de fermeture (1) servant à fixer un appareil électronique au niveau d'un système de retenue, avec
- une première partie de fermeture (2), qui présente une première partie rapportée (21),
- une deuxième partie de fermeture (3), qui présente une deuxième partie rapportée (31) et qui peut être placée au niveau de la première partie de fermeture (2) dans une direction de fermeture (X), dans lequel au moins une spire (211, 311) est disposée au niveau d'une des parties rapportées (21, 31) et au moins un élément de prise (311, 211) destiné à s'arrimer sur l'au moins une spire (211, 311) lors du placement l'une au niveau de l'autre des parties de fermeture (2, 3) est disposé au niveau de l'autre des parties rapportées (31, 21), et
- un système magnétique (22, 32), qui agit lors du placement avec une attraction magnétique entre la première partie de fermeture (2) et la deuxième partie de fermeture (3), dans lequel l'au moins une spire (211, 311) présente un pas (α) tel que lors du placement l'une au niveau de l'autre des parties de fermeture (2, 3), l'au moins une spire et l'au moins un élément de prise (311, 211) s'arriment l'un sur l'autre du fait de l'action d'attraction magnétique du système magnétique (22, 32) et les parties de fermeture (2, 3) sont tournées de ce fait de manière autonome l'une par rapport l'autre dans une direction de rotation (D) autour de la direction de fermeture (X),
**caractérisé en ce**
**que** l'au moins une spire (311) présente une première section (311A) et une deuxième section (311B), dans lequel les sections (311A, 311B) présentent différents pas et/ou directions.

10. Dispositif de fermeture selon la revendication 9, **caractérisé en ce que**, lors du placement l'une au niveau de l'autre des parties de fermeture (2, 3), sont tournées l'une par rapport à l'autre
- dans une première direction de rotation (D) les parties de fermeture (2, 3) lors de la prise de l'au moins un élément de prise (211) avec la première section (311A) et
- dans une deuxième direction de rotation (D') opposée à la première direction de rotation (D) les parties de fermeture (2, 3) lors de la prise de l'au moins un élément de prise (211) avec la deuxième section (311B).

11. Dispositif de fermeture selon l'une quelconque des revendications précédentes, **caractérisé en ce qu'**est disposée au niveau d'une des parties rapportées (21, 31) une spire complémentaire (211A, 311A) à l'au moins une spire (211, 311), qui est formée avec une symétrie en miroir par rapport à l'au moins une spire (211, 311) de telle manière que les parties de fermeture (2, 3) peuvent être tournées l'une par rapport à l'autre lors du placement l'une au niveau de l'autre dans la direction de rotation (D) ou également dans le sens opposé à la direction de rotation (D').

12. Dispositif de fermeture (1) servant à fixer un appareil électronique au niveau d'un système de retenue, avec
- une première partie de fermeture (2), qui présente une première partie rapportée (21),
- une deuxième partie de fermeture (3), qui présente une deuxième pièce rapportée (31) et qui peut être placée au niveau de la première partie de fermeture (2) dans une direction de fermeture (X), dans lequel au moins une spire (211, 311) est disposée au niveau d'une des parties rapportées (21, 31) et au moins un élément de prise (311, 211) destiné à s'arrimer sur l'au moins une spire (211, 311) lors du placement l'une au niveau l'autre des parties de fermeture (2, 3) est disposé au niveau de l'autre des parties rapportées (31, 21), et
- un système magnétique (22, 32), qui agit lors du placement avec une attraction magnétique entre la première partie de fermeture (2) et la deuxième partie de fermeture (3), dans lequel l'au moins une spire (211, 311) présente un pas (α) tel que lors du placement l'une au niveau de l'autre des parties de fermeture (2, 3), l'au moins une spire et l'au moins un élément de prise (311, 211) s'arriment l'un sur l'autre du fait de l'action d'attraction magnétique du système magnétique (22, 32) et les parties de fermeture (2, 3) sont tournées de ce fait de manière autonome l'une par rapport l'autre dans une direction de rotation (D) autour de la direction de fermeture (X),
**caractérisé en ce**
**que** se raccorde, vue dans la direction de rotation (D), à l'au moins une spire (211), une section de guidage (23), dans laquelle l'élément de prise (311) peut être introduit après le passage de la spire (211) dans la direction de fermeture (X).

13. Dispositif de fermeture selon la revendication 12, **caractérisé en ce que** l'élément de prise (23) se situe dans la section de guidage (23) dans une position de fermeture, dans laquelle la première partie de fermeture (2) et la deuxième partie de fermeture (3) sont placées l'une au niveau de l'autre, ce qui a pour effet qu'une rotation des parties de fermetures (2, 3) l'une par rapport à l'autre dans le sens opposé à la direction de rotation (D) est bloquée.

14. Dispositif de fermeture selon la revendication 12 ou 13, **caractérisé en ce que** la section de guidage (23) présente une surface d'appui (231) s'étendant de manière transversale par rapport à la direction de fermeture (X), qui délimite la section de guidage (23) dans le sens opposé à la direction de fermeture (X), dans lequel l'élément de prise (311) vient buter contre la face de butée (231) lors du déplacement dans le sens opposé à la direction de fermeture (X) à l'intérieur de la section de guidage (23).

15. Appareil électronique avec un dispositif de fermeture (1) selon l'une quelconque des revendications précédentes.
